# EUROPEAN PATENT APPLICATION

(11) **EP 4 178 080 A1**
(43) Date of publication of application: **10.05.2023**
(21) Application number: 21000318.2
(22) Date of filing: 09.11.2021
(51) Int. Cl.: H02K 1/20, H02K 1/32, H02K 3/24, H02K 9/19

(54) **ELECTRIC MACHINE**

(71) Applicant: MAHLE International GmbH, 70376 Stuttgart (DE)
(72) Inventor: Gvozdevskiy, Denis, DE - 71364 Winnenden (DE); Sever, Peter, SI - 9000 Murska Sobota (SI)

(57) **Abstract**

An electric machine (1) comprises a stator (2) and a rotor (3), whereby the stator (2) and/or the rotor comprises a stack of steel laminations (13), whereby the stack of steel laminations (13) is made up of identical steel steel laminations (8, 9) of substantially the same shape havingwith a plurality of openings (10) which when stacked one on top of another form a plurality of fluid cooling channels (7, 18, 19, 20, 22) extending axially through the stack, whereby a plurality of the steel laminations (8, 9) are provided with a different orientation in the stack (13) to the other steel laminations (8, 9) in the stack (13), such that the fluid cooling channels (7, 18, 19, 20, 22) form a serpentine cooling path extending axially through the stack (13 ). A method of assembling the electric machine comprises either rotating or reversing a plurality of the steel laminations (8, 9) in relation to the other steel laminations (8, 9) before or during assembly of the stack (13).

## Description

### TECHNICAL FIELD

The invention relates to an electric machine according to the preamble of independent claim 1 and a method of assembling an electric machine according to independent claim 19.

### BACKGROUND ART

An electric machine comprises a stator and/or a rotor made from a stack of steel laminations. A known prior art stator is disclosed in US2020/0373803A1. The stator has at least one stator winding with conductor bars arranged in slots of the stator lamination stack and fixed in the slots of the stator lamination stack with the aid of a fixing device. Direct cooling of the winding can be achieved by providing a space in the slot between the conductor bars and the lamination stack.

### SUMMARY

The electric machine according to the invention as defined in claim 1 has the advantage that heat can be transferred away from the lamination stack more effectively, and at the same time facilitating the manufacture of the electric machine, more particularly of the lamination stack.

This is achieved according to a first aspect of the invention with an electric machine comprising a stator and a rotor, whereby the stator and/or the rotor comprises a stack of steel laminations, whereby the stack of steel laminations is made up of steel laminations of substantially the same shape having a plurality of openings which when stacked one on top of another form a plurality of fluid cooling channels extending axially through the stack, whereby a plurality of the steel laminations are provided with a different orientation in the stack to the other steel laminations in the stack, such that the fluid cooling channels form a serpentine cooling path extending axially through the stack.

The laminations having substantially the same shape means that they can be made with the same stamping die. The axial or longitudinal direction is understood to be parallel to a rotation axis of a rotor of the electric machine, the radial and circumferential directions being radial to and circumferentially around the rotation axis respectively.

As a result of using the same shaped laminations but with different orientations in the stack, a serpentine cooling path can be created in the cooling channel, thereby increasing turbulence and improving the cooling efficiency in the channel.

The steel laminations can each comprise a protrusion extending into the fluid cooling channel whereby the protrusions in at least one pair of adjacent steel laminations are arranged on opposite sides of the fluid cooling channel. The orientations of the steel laminations of the at least one pair of adjacent steel laminations are therefore different, such that one protrusion in the channel is formed by one steel lamination and another protrusion in an opposite direction is formed in the same channel by the adjacent lamination. The use of protrusions into the cooling channel further increases the turbulence of the cooling flow and improves cooling efficiency.

The protrusion can extend into the fluid cooling channel in a circumferential or in a radial direction.

Advantageously the openings can have an elongated shape, and the protrusion can extend in the elongated direction of the opening into the fluid cooling channel. In this way the cooling channel can have a particularly tortuous serpentine cooling path, as the protrusion can extend over a large part of the elongated direction of the opening.

In one embodiment the different orientation is provided in that a plurality of the steel laminations are rotationally displaced in the circumferential direction relative to the other steel laminations. Therefore, the same die can be used to cut the laminations and some of the laminations are then rotated by a determined angle relative to the others when assembled, so that the openings on adjacent laminations line up to form the cooling channel. Two adjacent openings in each one of the steel laminations can therefore comprise a different shape, whereby a fluid cooling channel is formed in the stack using both of the two adjacent openings of a different shape in respective steel laminations in alternating fashion in the stack forming a serpentine cooling path extending axially through the stack.

The protrusion can extend into the fluid cooling channel in a radial direction from a radially inner or outer side of the fluid cooling channel, however this is limited to embodiments where the different orientation is achieved by a rotational displacement in the circumferential direction of the respective steel laminations. The radially extending protrusion allows the cooling channel to be elongated in the radial direction, whilst still providing a tortuous serpentine cooling path.

Alternatively the different orientation can be achieved by arranging the steel laminations in the stack with an orientation in the reversed and non-reversed directions and the openings in the identical steel laminations are formed asymmetrically such that the fluid cooling channels form a serpentine cooling path extending axially through the stack.

Due to the asymmetric arrangement of the openings in the laminations the openings of adjacent reversed and non-reversed laminations are, although fluidically connected, not exactly in alignment, thus forming a serpentine path, as opposed to a straight path as known in the prior art. The serpentine path increases turbulence in the cooling channel and improves the heat transfer to the cooling fluid. The asymmetrically of the openings can be achieved either by providing the openings with an asymmetric shape, or by positioning the openings asymmetrically on or around a radial line which is in alignment on both reversed and non-reversed laminations in the lamination stack.

The stack of steel laminations can be formed of a plurality of packages, whereby in each package the steel laminations have the same orientation, and alternate packages when assembled in the stack have a first orientation and a second different orientation respectively.

Each package can advantageously comprise at least ten steel laminations, this aids the assembly. It is however also possible to provide each lamination in the stack with a different orientation to an adjacent lamination.

In another embodiment, the number of laminations in each package varies along the axial length of the stack. In this way the cooling performance can be varied along the axial length of the stack in order to e.g. improve cooling at the package side where the preheated cooling medium leaves the cooling channel. Thus the number of laminations in a package can be less than the number of laminations in an adjacent package forming an upstream part of the cooling channel.

In one embodiment the stator and/or the rotor is provided with a plurality of slots arranged spaced apart in the circumferential direction and extending in the axial and radial directions, the slots accommodating a winding extending axially through the slots and each slot also accommodating at least one of the plurality of fluid cooling channels. The provision of the serpentine cooling channels in the area of the slots is particularly advantageous, as heat generated in the windings can be effectively transported away by cooling fluid flowing through the channel.

The winding can be in the form of conductor bars or hairpins and the at least one protrusion is arranged to separate two adjacent conductor bars or hairpins in the radial direction. In this case a cooling channel is formed between the two adjacent conductor bars or hairpins. The protrusion therefore performs the function of forming part of the serpentine channel, and also separating two adjacent conductor bars or hairpins in the radial direction.

The protrusion can also be used to separate windings of different phases whereby the thin primary insulation of the winding bar does not alone provide sufficient insulation.

Additionally or alternatively the protrusions in a cooling channel can be arranged to support at least one of the conductor bars or hairpins.

In the case of a stator the protrusion can be alternatively or additionally arranged between the radially innermost conductor bar or hairpin and an adjacent conductor bar or hairpin. It has been found that in this position the most heat is generated in the windings, and therefore the cooling channel formed in this position can more effectively transfer heat away from the winding.

In a further embodiment one of the plurality of fluid cooling channels is arranged in a stator slot radially inwards of the winding. The stator slot is preferably closed radially inward in the direction of the rotor, so that the stator slot containing the winding and at least one of the plurality of fluid cooling channels is not in direct fluid communication with the rotor. Therefore the whole coolant flow entering the fluid cooling channel in the slot at one end of the lamination stack flows in a generally axial direction in a serpentine manner past the protrusions to the other end of the lamination stack.

Additionally or alternatively a plurality of the fluid cooling channels can be arranged in the stack of steel laminations spaced from respective rotor or stator slots accommodating windings. In this way heat can be transferred away more evenly from the lamination stack to relieve thermal stress in the lamination stack.

Additionally or alternatively a plurality of the fluid cooling channels is arranged on the outer surface of the laminate stack. This can further aid in evenly transferring heat from the lamination stack in order to relieve thermal stress. In this case the fluid cooling channels are closed on the radially outer side by a sleeve or housing.

The cooling fluid is preferably oil or another dielectric fluid in order to prevent current flow between laminations.

In a second aspect of the invention a method of assembling an electric machine is provided, the electric machine comprising a stator and a rotor, whereby the stator and/or the rotor is assembled into a stack of steel laminations, whereby the stack of steel laminations is made up of steel laminations of substantially the same shape having a plurality of openings which when stacked one on top of another form a plurality of fluid cooling channels extending axially through the stack, whereby a plurality of the steel laminations are provided with a different orientation in the stack to the other steel laminations in the stack, such that the fluid cooling channels form a serpentine cooling path extending axially through the stack, whereby the assembly of the stack comprises the step of either rotating or reversing a plurality of the steel laminations in relation to the other steel laminations before or during assembly of the stack.

### BRIEF DESCRIPTION OF THE DRAWINGS

Embodiments will now be described by way of example only with reference to the accompanying drawings, in which:
Figure 1 is a schematic cross-section view of an electric machine,
Figure 2 shows a cross section view of a stator according to one embodiment of the invention,
Figure 3 shows an enlarged view of part of the stator in figure 2,
Figure 4 shows cross section views through cooling channels of the stator in figure 2
Figure 5a shows a schematic cross-section view of part of a steel lamination according to one embodiment of the invention,
Figure 5b shows a schematic cross-section view of part of an electric machine according to one embodiment of the invention,

### DETAILED DESCRIPTION

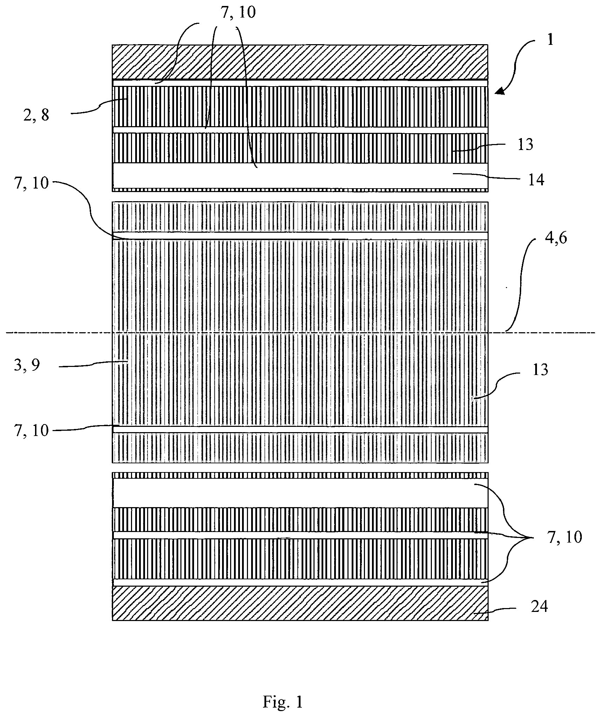

Figure 1 shows one embodiment of an electric machine 1 comprising a rotor 3 which rotates about a central longitudinal axis 4 and a stator 2 which surrounds the rotor 3. The stator 2 comprises windings 5 in the form of wires, bars or hairpins which generate a magnetic field when electrically excited which interacts with a magnetic field generated in the rotor 3 to exert a rotational force on the rotor 3. Although the rotor 3 is shown radially inside the stator 2, it could instead be positioned radially outside the stator 2 thus surrounding the stator 2. As can be seen in figure 1, the stator 2 is made up of at least one stack of steel laminations 8. The rotor 3 can also be made up of at least one stack of steel laminations 9. According to the invention the stator 2 and/or the rotor 3 comprises cooling channels 7 extending in the longitudinal direction 6 through the stack of steel lamination 8, 9. A cooling fluid is arranged to flow through the cooling channels 7 in the longitudinal direction 6 through the stator 2 and/or the rotor 3 in order to transfer heat away from the stator 2 or from the rotor 3.

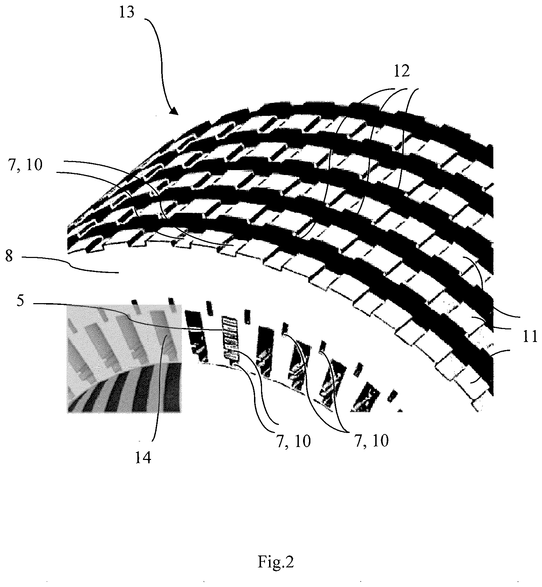

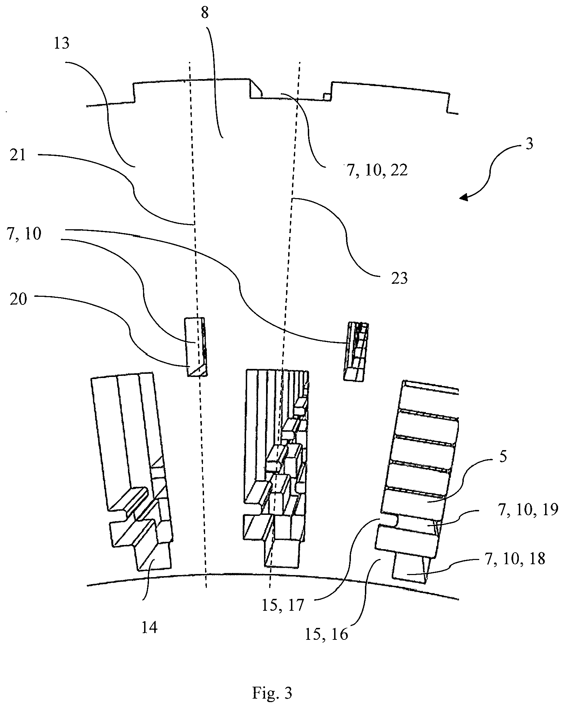

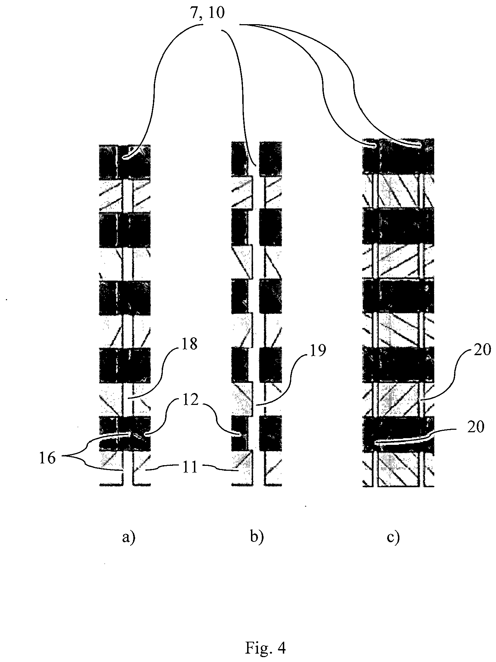

Figures 2 and 3 show a view of one embodiment of the invention whereby the cooling channels are formed in the stator laminations 8. The stator laminations 8 are formed having substantially the same shape. That is, they have the same pattern of slots or openings 10 and can therefore be manufactured using a single stamping die. The stator laminations 8 are arranged into packages 11, 12. Each package contains a plurality of steel laminations 8, whereby the laminations 8 within a package 11, 12 are all orientated in the same direction. Alternate packages are however arranged so that the laminations 8 in adjacent packages 11, 12 are orientated in a reversed and a non-reversed direction respectively. Each package may comprise at least 10 laminations. When the stator laminations 8 are stacked one on top of the other, slots or openings 10 in the stator laminations align up to form the cooling channels 7. The openings 10 are arranged in the laminations 8 asymmetrically. This means that if the orientation of the lamination is reversed, the openings 10 are not in exact alignment. The asymmetry of the openings 10 is designed such that that the flow path through the lamination stack has a serpentine form due to the alternate lamination packages 11, 12 with reversed and non-reversed orientation, as can be seen in figure 4. Although figures 2 and 3 relate to a stator, the principle applies equally to a rotor 3 made from a stack 13 of laminations 9. As the cooling channels 7 are defined by the openings 10 of the laminations 8 the cooling fluid is in direct contact with the laminations 8. The cooling fluid should therefore be a dielectric fluid e.g. oil in order to prevent current flow between laminations.

In the embodiment shown in figure 3, the stator 2 comprises a plurality stator slots 14 extending in the longitudinal direction 6 through the stator 2. Windings 5 in the form of bars or hairpins are arranged in the slots 14. The slots 14 are closed at the radially inner side so that a cooling fluid flowing through the slots 14 is prevented from entering the rotor gap, i.e. the space between the rotor 3 and the stator 2. The slots 14 are arranged spaced apart circumferentially in the stator 2. The slots 14 are formed by openings 10 in each of the laminations 8, whereby the opening 10 is formed asymmetrically. The asymmetry of each opening 10 is provided here by at least one protrusion 15, 16 extending on one side of the opening 10 in the circumferential direction. A protrusion 16 can thus be provided as shown in figures 3 and 4 at the radially inner end of the opening 7. When such laminations are arranged into packages with alternate reversed and non-reversed orientation of laminations an inner cooling channel 7, 18 with a serpentine form can be achieved as shown in figure 4a). The radial outer side of the inner cooling channel 18 can be delimited by the winding 5. The serpentine form of the cooling channel 7 increases the turbulence in the cooling channel 7 thus improving the rate of heat transfer to the cooling fluid. A protrusion 17 can alternatively or additionally (as shown) be arranged to project between two radially adjacent winding bars or hairpins 5, thus separating the two adjacent winding bars or hairpins 5 in order to form a cooling channel 7, 19 therebetween, the cooling channel 7, 19 having a serpentine form, as shown in fig 4b). The protrusion 17, and hence the cooling channel 19, is preferably placed between the radially inner winding 5 and a radially adjacent winding 5, where it has been found to most efficiently transfer heat from the stator windings. It would however additionally or alternatively be advantageous to provide the protrusion 17 between two radially adjacent windings 5 with different phases, in order to improve the insulation between the conductors with different phases.

The stator 3 in the embodiment in figure 3 additionally has openings 10 in the laminations 8 which are spaced from the stator slots 14 accommodating the windings 5. The openings 10 are shown placed radially in the vicinity of the slot ends, however they could be placed radially at any position in the stator lamination, for example close to stator outer surface. There can also be such openings 10 position at several different radial positions in the stator 2 and spaced from the stator slots 14. In this way heat can be transferred away more evenly from the lamination stack 13 to relieve thermal stress in the lamination stack 13. These openings 10 together with the openings 10 on adjacent laminations 8 in the stack form a cooling channel 20 extending in the longitudinal direction 6. When the laminations 8 with these openings 10 are arranged into packages with alternate reversed and non-reversed orientation of laminations 8 a cooling channel 20 with a serpentine form can be achieved as shown in figure 4c). In this case, the asymmetry of the openings 10 is provided by the asymmetric position of the openings 10 with regard to a radial line 21 at the same position on each of the laminations 8 which are in alignment on both reversed and non-reversed laminations in the lamination stack 13. The serpentine cooling channel 21 is preferably positioned circumferentially between the slots 14.

The stator 3 in the embodiment in figure 3 additionally has openings 10 in the laminations 8 on the outer periphery of the laminations 8. These openings 10 similarly form a cooling channel 22 extending in the longitudinal direction 6 with the openings 10 of adjacent laminations 8. The openings 10 are again formed asymmetrically around a radial line 23 at the same position on each of the laminations 8 which are in alignment on both reversed and non-reversed laminations in the lamination stack 13. The cooling channel 22 can be closed on the radially outer side by a sleeve or housing part 24.

The cooling channels 10 have been described above relating to the stator 2, however it is also possible to provide a rotor with such cooling channels 7.

In all the embodiments in 2 and 3 the cooling channels 7 with a serpentine path are provided by alternate packages 11, 12 of laminations of substantially the same shape, whereby the orientation of the laminations in adjacent packages are reversed and non-reversed. Alternatively, the cooling channels 7 with a serpentine path are provided by alternate packages 11, 12 of laminations of substantially the same shape, whereby the orientation of the laminations in adjacent packages are rotationally displaced.

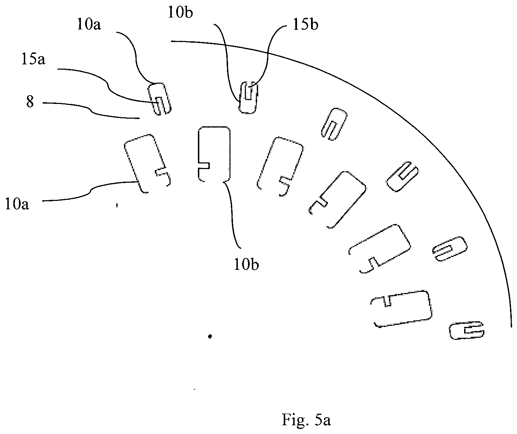

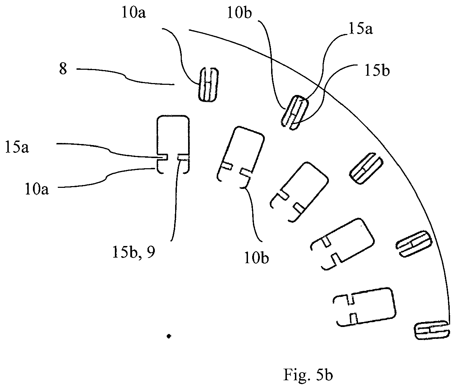

Figure 5b shows an embodiment whereby a plurality of the steel laminations 8, 9 are rotationally displaced in the circumferential direction relative to the other steel laminations 8, 9. In this case two adjacent openings 10a, 10b in each of the steel laminations 8, 9 comprise a different shape, this can be seen more clearly in figure 5a which shows just one of the laminations 8. If one of the laminations 8 is then rotated with respect to an adjacent lamination 9, in this case by 20 degrees, then the two openings 10a, 10b line up to form part of a single cooling channel 7. It can be seen in the embodiment shown, that the protrusions 15a and 15b in a pair of adjacent laminations 8,9 extend into the same cooling channel 7 on different sides of the cooling channel 7. When assembled into a stack 13 with alternating orientation of laminations 8, 9 a serpentine cooling channel is formed. The protrusions can be in a radial or circumferential direction as shown in figure 5.

In a further embodiment (not shown) the thickness or the number of laminations 8 in each package can be different along the longitudinal direction 6 of the lamination stack 13. The cooling performance can therefore be varied along the axial length of the stack for example to improve cooling at the stack side where the preheated cooling medium leaves the cooling channel. In this case the number of laminations in a package 11, 12 is less than the number of laminations in an adjacent package 11, 12 forming an upstream part of the cooling channel 7.

### LIST OF REFERENCE NUMERALS

- 1.: Electric machine
- 2.: Stator
- 3.: Rotor
- 4.: Central axis
- 5.: Winding
- 6.: Longitudinal direction
- 7.: Cooling channels
- 8.: Stator laminations
- 9.: Rotor laminations
- 10.: Opening
- 11.: Package
- 12.: Reversed package
- 13.: Lamination stack
- 14.: Slot
- 15.: Protrusion
- 16.: Protrusion
- 17.: Protrusion
- 18.: Inner cooling channel
- 19.: Cooling channel
- 20.: Cooling channel
- 21.: Radial line
- 22.: Cooling channel
- 23.: Radial line
- 24.: Sleeve

## Claims

1. An electric machine (1) comprising a stator (2) and a rotor (3), whereby the stator (2) and/or the rotor comprises a stack of steel laminations (13), whereby the stack of steel laminations (13) is made up of steel laminations (8, 9) of substantially the same shape having a plurality of openings (10) which when stacked one on top of another form a plurality of fluid cooling channels (7, 18, 19, 20, 22) extending axially through the stack, whereby a plurality of the steel laminations (8, 9) are provided with a different orientation in the stack (13) to the other steel laminations (8, 9) in the stack (13), such that the fluid cooling channels (7, 18, 19, 20, 22) form a serpentine cooling path extending axially through the stack (13).

2. An electric machine according to claim 1, whereby the steel laminations (8, 9) each comprise a protrusion (15, 16, 17) extending into the fluid cooling channel (7, 18, 19, 20, 22), whereby the protrusions (15, 16, 17) in at least one pair of adjacent steel laminations (8, 9) are arranged on opposite sides of the fluid cooling channel (7, 18, 19, 20, 22).

3. An electric machine according to claim 2, whereby the protrusion (15, 16, 17) extends into the fluid cooling channel (7, 18, 19) in a circumferential direction.

4. An electric machine according to claim 2, whereby the protrusion (15, 16, 17) extends into the fluid cooling channel (7, 18, 19) in a radial direction from a radially inner or outer side of the fluid cooling channel (7, 18, 19).

5. An electric machine according to one of claims 1 to 4, whereby the different orientation is provided in that a plurality of the steel laminations (8, 9) are rotationally displaced in the circumferential direction relative to the other steel laminations (8, 9).

6. An electric machine according to one of claims 1 to 5, whereby two adjacent openings (10a, 10b) in each of the steel laminations (8, 9) comprise a different shape, whereby a fluid cooling channel (7, 18, 19, 20, 22) is formed in the stack (13) using both of the two adjacent openings (10) of a different shape in respective steel laminations (8, 9) in alternating fashion in the stack (13) forming a serpentine cooling path extending axially through the stack (13).

7. An electric machine according to one of claims 1 to 3, whereby the different orientation is achieved by arranging the steel laminations (8, 9) in the stack (13) to be orientated in the reversed and non-reversed directions and the openings in the identical steel laminations (8, 9) are formed asymmetrically such that the fluid cooling channels (7, 18, 19, 20, 22) form a serpentine cooling path extending axially through the stack (13).

8. An electric machine according to claim 7, whereby the stack of steel laminations (13) is formed of a plurality of packages (11, 12), whereby in each package (11, 12) the steel laminations (8, 9) have the same orientation, and alternate packages (11, 12) when assembled in the stack (13) have a first orientation and a second different orientation respectively.

9. An electric machine according to claim 8, whereby each package (11, 12) comprises at least ten steel laminations.

10. An electric machine according to claim 8, whereby the number of laminations (8, 9) in each package (11, 12) varies along the axial length of the stack.

11. An electric machine according to claim 10, whereby the number of laminations (8, 9) in a package (11, 12) is less than the number of laminations in an adjacent package forming an upstream part of the cooling channel (7, 18, 19, 20, 22).

12. An electric machine according to any one of the preceding claims, whereby the stator (2) and/or the rotor (3) is provided with a plurality of slots (14) arranged spaced apart in the circumferential direction and extending in the axial (6) and radial directions, the slots accommodating a winding (5) extending axially through the slots (14) and each slot (14) also accommodating at least one of the plurality of fluid cooling channels (7, 18, 19).

13. An electric machine according to claim 12, whereby the winding (5) is in the form of conductor bars or hairpins and the at least one protrusion is arranged to separate two adjacent conductor bars or hairpins in the radial direction.

14. An electric machine according to claim 12 or 13, whereby the protrusion (17) is arranged between the radially innermost conductor bar or hairpin (5) and an adjacent conductor bar or hairpin (5).

15. An electric machine according to claim 12 or 13, whereby one of the plurality of fluid cooling channels (18) is arranged in a stator slot (14) radially inwards of the winding (5).

16. An electric machine according to one of claims 12 to 15, whereby the stator slot (14) is closed radially inward in the direction of the rotor (3).

17. An electric machine according to any one of the preceding claims, whereby one of the plurality of fluid cooling channels (7, 20) is arranged in the stack of steel laminations (13) spaced from respective rotor or stator slots accommodating windings (5) and spaced from the radially outer surface of the stack (13) of steal laminations.

18. An electric machine according to any one of the preceding claims, whereby one of the plurality of fluid cooling channels (22) is arranged on the outer surface of the laminate stack (13).

19. A method of assembling an electric machine according to claim 1 comprising either rotating or reversing a plurality of the steel laminations (8, 9) in relation to the other steel laminations (8, 9) before or during assembly of the stack (13).
